# EUROPÄISCHE PATENTSCHRIFT

(11) **EP 3 658 997 B1**
(45) Veröffentlichungstag und Bekanntmachung des Hinweises auf die Patenterteilung: **04.11.2026**
(21) Anmeldenummer: 18746919.2
(22) Anmeldetag: 26.07.2018
(51) Int. Cl.: G05B 19/4093, B23Q 17/00

(54) **WERKZEUGMASCHINENSYSTEM MIT AUTOMATISCHER WUCHTPROTOKOLLVERWERTUNG**
MACHINE TOOL SYSTEM USING AUTOMATIC BALANCING PROTOCOL
SYSTÈME DE MACHINE-OUTIL AVEC UTILISATION AUTOMATIQUE DU COMPTE-RENDU D'ÉQUILIBRAGE

(30) Priorität: 26.07.2017 DE 102017116878; 27.07.2017 DE 102017117059
(43) Veröffentlichungstag der Anmeldung: 03.06.2020
(73) Patentinhaber: Franz Haimer Maschinenbau KG, 86568 Hollenbach-Igenhausen (DE)
(72) Erfinder: HAIMER, Andreas, 86568 Igenhausen (DE)
(86) Internationale Anmeldenummer: PCT/EP2018/070360
(87) Internationale Veröffentlichungsnummer: WO 2019/020775

(56) Entgegenhaltungen:
- EP-A1- 1 950 005

## Beschreibung

Die Erfindung betrifft ein Werkzeugmaschinensystem nach dem Oberbegriff des Anspruchs 1 sowie eine zugehörige Werkzeugmaschine nach dem Anspruch 9, ein komplementäres Verfahren nach dem Anspruch 12 und eine entsprechende Verwendung nach dem Anspruch 13.

### TECHNISCHER HINTERGRUND

Werkzeugmaschinen zur spanabhebenden Bearbeitung werden heutzutage üblicherweise mit nachfolgend als "Werkzeugköpfe" bezeichneten Werkzeugen bestückt, die aus einem Werkzeugspannfutter bzw. Spannfutter mit dem darin festgesetzten Zerspanungswerkzeug bestehen, z. B. in Gestalt eines Schaft-Schruppfräsers. Zusätzlich kann ein solcher Werkzeugkopf weitere Komponenten umfassen, z. B. ein Sprühsystem für die Abgabe eines Kühlmittelstrahls an die Werkzeugschneiden.

Zum Zwecke des schnellen und präzisen Werkzeugwechsels wird einfach der aktuelle Werkzeugkopf von der Spindel der Werkzeugmaschine abgekuppelt. Dann wird ein anderer Werkzeugkopf in Gestalt eines Spannfutters angekuppelt, in dem das für den nächsten Bearbeitungsschritt benötigte Zerspanungswerkzeug gehalten ist, beispielsweise in Gestalt eines Schaft-Schlichtfräsers.

Der Zusammenbau eines Zerspanungswerkzeugs mit einem Werkzeughalter und ggf. den weiteren Komponenten, beispielsweise einem Kühlmittelrohr, einem Anzugsbolzen oder einer modularen Verlängerung, führt durchweg zu einem Werkzeugkopf, der eine gewisse Unwucht aufweist. Sobald der Werkzeugkopf an die Spindel angekuppelt rotiert, verursacht seine mehr als nur unwesentliche Unwucht Vibrationen, die den Zerspanungsprozess qualitativ beeinträchtigen und im resonanznahen Bereich sogar die Spindel zerstören können.

Daher werden Werkzeugköpfe der hier in Rede stehenden Art im besten Fall nach ihrem Zusammenbau bzw. vor ihrer ersten Inbetriebnahme ausgewuchtet.

Das Auswuchten ist jedoch aufwändig und kann übersehen oder bewusst ausgelassen werden, obwohl auf der Maschinenspindel meist ein Warnhinweis als Sticker aufgebracht ist.

Selbst bei ausgewuchteten Werkzeugköpfen besteht die Gefahr, dass der letzte Wuchtvorgang schon längere Zeit zurückliegt und der aktuelle Auswuchtzustand nicht bekannt ist. In diesem Zusammenhang ist zu bedenken, dass sich der Auswuchtzustand im Betrieb verändern kann, z. B. durch verschleißbedingten Materialabtrag bzw. durch Ausbrüche an den Schneiden des Zerspanungswerkzeugs und/oder dadurch, dass das Zerspanungswerkzeug vibrationsbedingt bzw. durch kurzzeitige Überlastung im Werkzeughalter migriert, auch wenn die Migrationsbeträge oft nur gering sind. Aufgrund dessen können im Laufe des Betriebs oder nach wiederholtem Arbeitseinsatz der Werkzeugköpfe unerwartete Unwuchten auftreten.

Moderne Werkzeugmaschinen verfügen deshalb über eine Vibrationsüberwachung durch Sensoren im Bereich der Spindel, meist in der Gestalt von Beschleunigungssensoren.

Diese messen die tatsächlich auftretenden Vibrationen und stoppen die Bearbeitung, wenn die Vibrationen einen maximal zulässigen Grenzwert übersteigen.

Ein solcher Stopp kann aber naturgemäß erst geschehen, wenn die Bearbeitung bereits begonnen hat. Ein Stopp der Bearbeitung bedeutet indes Stillstands- und Ausfallzeiten an der Maschine, da die Ursache der Vibrationen erst gefunden und beseitigt werden muss. Hohe Kosten und Verzögerungen sind die Folge .

Bei Maschinen ohne Vibrationsüberwachung können die Vibrationen ohne Vorwarnung Schäden an Werkstück und Maschine hervorrufen.

Ein Werkzeugmaschinensystem mit den Merkmalen des Oberbegriffs von Anspruch 1 ist aus der EP 1 950 005 A1 bekannt.

### DIE DER ERFINDUNG ZUGRUNDE LIEGENDE AUFGABE

Angesichts dessen liegt der Erfindung die Aufgabe zugrunde, ein System zu schaffen, bei dem die Unwuchteigenschaften eines Werkzeugkopfes zuverlässig, frühzeitig und möglichst schon zu einem Zeitpunkt berücksichtigt werden können, der zeitlich vor dem nächstfolgenden Arbeitsbeginn des Werkzeugkopfes liegt.

### DIE ERFINDUNGSGEMASSE LÖSUNG

Die Lösung dieser Aufgabe durch ein Werkzeugmaschinensystem mit den Merkmalen des Anspruchs 1, ein Verfahren mit den Merkmalen des Anspruchs 13 sowie eine Verwendung mit den Merkmalen des Anspruchs 14. Bevorzugte Ausführungen des erfindungsgemäßen Werkzeugmaschinensystems sind Gegenstand der Ansprüche 2-12.

Demnach wird ein Werkzeugmaschinensystem mit einer Werkzeugmaschine vorgeschlagen, die (mindestens) eine zum Zwecke der spanabhebenden Werkstückbearbeitung drehend antreibbare Hauptspindel bzw. Spindel umfasst.

Zu dem Werkzeugmaschinensystem gehören mehrere, jeweils in Spannfutter eingespannte Werkzeuge, die sogenannten Werkzeugköpfe. Die Werkzeugköpfe bilden eine - im Regelfall genormte - Schnittstelle zur Werkzeugspindel aus. Sie sind an die Spindel ankuppelbar, meist durch automatische Werkzeugwechsler.

Zu dem erfindungsgemäßen Werkzeugmaschinensystem gehört ferner eine Wuchteinrichtung bzw. Wuchtmaschine zum Auswuchten der Werkzeugköpfe. Die Wuchteinrichtung kann in manchen Fällen unmittelbar in die Werkzeugmaschine integriert sein, wird jedoch meist eine separate Wuchtmaschine sein, die mit der Werkzeugmaschine vernetzt ist bzw. korrespondiert. Die Wuchteinrichtung ist körperlich so ausgestaltet, dass sie dazu in der Lage ist, mindestens ein im Zuge des Wuchtens ermitteltes Wuchtdatum bzw. die im Zuge des Wuchtens ermittelten Wuchtdaten zur Weiterverarbeitung auszugeben bzw. abzuspeichern.

Es versteht sich, dass sich die Wuchteinrichtung nicht zwingend in räumlicher Nähe zur Werkzeugmaschine befinden und/oder zur Datenübertragung mit dieser verbunden sein muss. Der Wuchtvorgang bzw. die Ermittlung der Wuchtdaten kann auch extern durch einen Dienstleister oder Zulieferer erfolgen.

Das Werkzeugmaschinensystem umfasst darüber hinaus einen für den erfindungsgemäßen Zweck arbeitsfertig installierten Datenspeicher. Alternativ könnte das Werkzeugmaschinensystem für den erfindungsgemäßen Zweck eine Vernetzung zu einem Datenspeicher umfassen. In diesem sind für die systemzugehörigen Werkzeugköpfe - d. h. die Werkzeugköpfe, die aktuell zum Einsatz auf der systemzugehörigen Werkzeugmaschine bestimmt sind - jeweils die Wuchtdaten abgespeichert, als Wuchtprotokoll.

Bevorzugt verfügt das Werkzeugmaschinensystem auch über einen (meist zusätzlichen) weiteren Speicher, in dem Wuchtdaten von in der Vergangenheit benutzten Werkzeugköpfen abgespeichert werden, z. B. in Form einer Log-Datei. Das ermöglicht es z. B. im Nachhinein, bei einem Defekt im Bereich der Spindel, Rückschlüsse auf die Schadensursache zu ziehen. Besonders bevorzugt kann das Werkzeugmaschinensystem auch über eine Anbindung an einen vernetzten Datenspeicher verfügen.

In seinem weiteren Sinne bezeichnet der Begriff "Wuchtdaten" in dieser Beschreibung und den nachfolgenden Ansprüchen auch jeweils nur ein einzelnes "Wuchtdatum". Der Begriff "Wuchtdaten" steht also jeweils auch für den Singular. Bevorzugt wird der Begriff "Wuchtdaten" allerdings in seinem engeren Sinne verstanden und steht dann für mindestens zwei unterschiedliche Daten eines Werkzeugkopfes.

Schließlich umfasst das Werkzeugmaschinensystem einen für den erfindungsgemäßen Zweck arbeitsfertig installierten Controller. Dieser liest für einen an die Spindel anzukuppelnden Werkzeugkopf das zugehörige Wuchtprotokoll aus. Sodann vergleicht er das Ausgelesene mit dem oder den Parametern der kommenden spanabhebenden Bearbeitung, für die dieser Werkzeugkopf vorgesehen ist.

Auf diese Art und Weise kann jeweils zu einem Zeitpunkt, bevor der ausgewählte Werkzeugkopf mit seinem nächsten Einsatzzyklus beginnt, automatisch geprüft werden, ob der Werkzeugkopf wie geplant zum Einsatz kommen kann und ob ggf. Veranlassungen zu treffen sind. Alternativ kann während der Bearbeitung mit einer "Wuchtampel" der Status visualisiert oder ein Warnsignal gesendet werden.

Das bedeutet im Regelfall, dass der Controller prüft, inwieweit der betreffende Werkzeugkopf im Lichte der in seinem Wuchtprotokoll abgelegten Wuchtdaten für die vorgesehene spanabhebende Bearbeitung geeignet ist. Wird eine fehlende Eignung festgestellt, wird der Werkzeugkopf zum Beispiel als ungeeignet zurückgewiesen - etwa weil sein dokumentierter Auswuchtzustand nicht zu der beabsichtigten Arbeitsdrehzahl passt, oder eine Warnung visualisiert.

Im Gegensatz zu ähnlichen Verfahren ist es das erklärte Ziel der Erfindung nicht nur die isolierte Aussage über den Zustand eines Werkzeuges zu dokumentieren. Vielmehr soll eine Möglichkeit geschaffen werden durch Protokollieren und Vergleichen sowohl die Lebensdauer eines Werkzeuges als auch insbesondere der Spindel zu verlängern. Hält man sich vor Augen, welche Kräfte auf eine Spindel wirken, die mit einem nicht oder nicht ausreichend ausgewuchteten Werkzeugkopf bei der Verarbeitung verbunden ist, wird schnell klar, weshalb die Überwachung des Auswuchtzustandes die Nutzungsdauer der Spindel verlängert und das Ausfallrisiko reduziert. Erstmals wird also nicht nur eine Überwachung des Werkzeuges und des Werkstückes ermöglicht, sondern auch eine schonende Verwendung der Spindel. So wird durch die Überwachung des Auswuchtzustandes zum Beispiel einem Lagerschaden vorgebeugt, wodurch sich die Lebensdauer der Spindel in etwa verdoppeln. Es ist für die Erfindung daher wesentlich, dass hier ein Werkzeugmaschinensystem als Ganzes betrachtet wird.

In bestimmten Fällen kann sich der Controller auch darauf beschränken, die Wuchtdaten mit mindestens einem allgemeinen Wuchtparameter zu vergleichen. Ein solcher Vergleich wird etwa dann vorgenommen, wenn mit dem Werkzeugmaschinensystem allgemeine, nicht auf eine sich konkret anschließende Bearbeitung beziehende Messungen vorgenommen werden sollen, wie beispielsweise das Klassifizieren von Werkzeugen dahingehend, ob deren Unwucht größer oder kleiner als ein bestimmter Grenzwert ist.

Im Gegensatz zu ähnlichen Verfahren ist es eine ausdrückliche Option der Erfindung, nicht nur die isolierte Aussage über den Zustand eines Werkzeuges zu dokumentieren. Vielmehr soll eine Möglichkeit geschaffen werden, durch Protokollieren und Vergleichen sowohl die Lebensdauer eines Werkzeuges als auch insbesondere der Spindel zu verlängern. Hält man sich vor Augen, welche Kräfte auf eine Spindel wirken, die mit einem nicht oder nicht ausreichend ausgewuchteten Werkzeugkopf bei der Verarbeitung verbunden ist, wird schnell klar, weshalb die Überwachung des Auswuchtzustandes die Nutzungsdauer der Spindel verlängert und das Ausfallrisiko reduziert. Erstmals wird also nicht nur eine Überwachung des Werkzeuges und des Werkstückes ermöglicht, sondern auch eine schonende Verwendung der Spindel. So wird durch die Überwachung des Auswuchtzustandes zum Beispiel einem Lagerschaden vorgebeugt, wodurch sich die Lebensdauer der Spindel in etwa verdoppelt. Es ist für die Erfindung daher wesentlich, dass hier ein Werkzeugmaschinensystem als Ganzes betrachtet wird.

### BEVORZUGTE AUSGESTALTUNGSMÖGLICHKEITEN DER ERFINDUNG

Besonders bevorzugt ist es, wenn der Controller bzw. die Werkzeugmaschine gebrauchsfertig so gerüstet ist, dass eine oder mehrere Parameter für die vorgesehene spanabhebende Bearbeitung automatisch an die Wuchtdaten angepasst werden können, die das Wuchtprotokoll für den betreffenden Werkzeugkopf dokumentiert.

Das bedeutet, dass der Controller prüft, inwieweit der betreffende Werkzeugkopf im Lichte der in seinem Wuchtprotokoll abgelegten Wuchtdaten für die (als nächstes) vorgesehene spanabhebende Bearbeitung geeignet ist. Wird eine fehlende Eignung festgestellt, werden bei dieser Option ein oder mehrere Parameter für die kommende spanabhebende Bearbeitung angepasst, z. B. indem die Arbeitsdrehzahl abgesenkt wird und/oder der Vorschub beeinflusst wird - um dadurch zu erreichen, dass die kommenden Arbeitsbedingungen zu dem dokumentierten Auswuchtzustand passen, die in diesem Stadium hingenommen werden muss, wenn ein Stopp mit anschließendem Austausch des Werkzeugkopfes vermieden werden soll.

Auf diese Art und Weise werden unnötige Maschinenstillstandzeiten vermieden, denn ein abschnittweise langsamerer Arbeitsfortschritt ist einem zeitweiligen kompletten Maschinenstillstand im Regelfall vorzuziehen, auch wenn nach dem Wiederanfahren zügiger gearbeitet werden könnte.

Unter "gebrauchsfertig" versteht man in diesem und im nachfolgenden Zusammenhang eine derartige Einsatzbereitschaft der Maschine, dass keine dem regulären Maschinenbediener verschlossene Umprogrammierung und kein dem regulären Maschinenbediener verschlossener Eingriff in die Software oder Steuerung vorgenommen werden muss. Stattdessen ist die betreffende Funktion dauerhaft aktiviert oder sie kann vom regulären Maschinenbediener menümäßig, durch vorgegebene Tastenkombination bzw. durch Einstecken eines Dongles oder dergleichen, aktiviert werden.

Alternativ oder zusätzlich kann der Controller bzw. die Werkzeugmaschine auch gebrauchsfertig so gerüstet sein, dass automatisch eine Optimierung vorgenommen werden kann. Eine solche Optimierung kommt in Betracht, wenn das Wuchtprotokoll dokumentiert, dass der aktuell angetroffene Werkzeugkopf mit nicht ausreichender Genauigkeit ausgewuchtet ist und daher z. B. die automatische Einstellung einer niedrigeren Spindeldrehzahl notwendig ist, als ursprünglich beabsichtigt. Auf diese Art und Weise wird ein weiterhin stabiler Arbeitsfluss erreicht und damit eine individuelle Optimierung der Maschinenstückzeit. Diese Daten können zur Optimierung einer besonders bevorzugten Ausführungsform auch mit Schnittparametern oder Zerspanungsdaten des Werkzeugs ergänzt oder separat angezeigt werden.

Besonders günstig ist es, wenn der Controller bzw. die Werkzeugmaschine gebrauchsfertig so gerüstet sind, dass der Werkzeugkopf, vorzugsweise noch vor dessen Ankuppeln an die Spindel, ausnahmsweise zur weiteren Verwendung freigegeben wird, auch wenn dessen Wuchtdaten nicht zu den Parametern der spanabhebenden Bearbeitung passen, für die dieser Werkzeugkopf vorgesehen ist. Dabei wird die Sonderfreigabe dokumentiert, vorzugsweise im Wuchtprotokoll für den betreffenden Werkzeugkopf und/oder in der Log-Datei der Werkzeugmaschine.

Eine derartige Ertüchtigung hat den großen Vorteil, dass auch dann ein Stillstand vermieden wird, wenn der Werkzeugkopf eigentlich nicht für die geplanten Arbeitsbedingungen geeignet ist, die Maschinentaktzeit aber durch Verkettung mit anderen Anlagen fest vorgegeben ist, so dass der verminderten Leistungsfähigkeit des Werkzeugkopfes nicht einfach durch Verlangsamung Rechnung getragen werden kann, etwa durch Absenkung der Spindeldrehzahl. In diesem Fall kann unter Berücksichtigung der Konsequenzen eine automatische Entscheidung getroffen werden, dass der Werkzeugkopf ausnahmsweise unter nichtoptimalen Bedingungen eingesetzt wird. Die optionale Protokollierung dieser Tatsache kann beispielsweise sicherstellen, dass der Werkzeugkopf bei nächster Gelegenheit ausgetauscht wird, obwohl das Zerspanungswerkzeug eigentlich seine planmäßige Austauschreife noch nicht erreicht hat. Zudem kann bei u. U. erst viel später auftretenden Schäden an der Werkzeugmaschine oder deren Spindel festgestellt werden, ob die verwendeten Werkzeugköpfe immer den geforderten Wuchtanforderungen entsprochen haben.

Alternativ ist der reine Betrieb mit einer Wuchtampel samt Dokumentation möglich, wo der Zustand (grün für gewuchtet; rot für ungewuchtet, gelb für unbekannt) gespeichert wird.

Besonders vorteilhaft ist es, wenn die zum System gehörende Werkzeugmaschine selbst dazu in der Lage ist, zumindest gewisse Feststellungen im Hinblick auf die Auswuchteigenschaften des Werkzeugkopfes zu treffen - nämlich Feststellungen, die eine Prüfung erlauben, ob die in dem ursprünglichen Wuchtprotokoll zu findenden Wuchtdaten noch stimmen können. Solche Feststellungen können zum Beispiel über eine Vibrationsmessung an der Werkzeugmaschine getroffen werden. Sobald hier erhöhte Werte festgestellt werden, ist das ein Zeichnen dafür, dass der Werkzeugkopf ausgeschleust und zumindest einer erneuten Protokollierung oder Wuchtung unterzogen werden muss.

Anspruchsgemäß dokumentiert das Wuchtprotokoll mehrere der nachfolgend genannten Wuchtdaten: Datum des letzten Auswuchtvorgangs, Angabe der zulässigen Drehzahl, Angabe der vorhandenen Restunwucht, statische Unwucht mit oder ohne Angabe der Werkzeugmasse, dynamische Unwucht mit oder ohne Angabe der Werkzeugmasse, z. B. als Kombination statische Unwucht mit Momentenunwucht, Auswuchtgüte mit oder ohne Angabe der Werkzeugmasse, Quotient aus Werkzeugmasse/Restunwucht, Zerspanungs- und Fräsparameter ausgewuchtet, nichts ausgewuchtet.

In einer nicht anspruchsgemäßen Variante dokumentiert das Wuchtprotokoll mehrere und idealerweise alle oder mindestens alle bis auf zwei der nachfolgend genannten Wuchtdaten:
- Datum des letzten Auswuchtvorganges,
- Angabe der zulässigen Drehzahl,
- Angabe der vorhandenen statischen Unwucht, mit oder ohne Angabe der Werkzeugmasse,
- Angabe der vorhandenen dynamischen Unwucht, z. B. als Kombination statische Unwucht mit Momentenunwucht, mit oder ohne Angabe der Werkzeugmasse,
- Angabe der Auswuchtgüte nach ISO 21940,
- Quotient aus Werkzeugmasse und vorhandener Restunwucht,
- ausgewuchtet/nicht ausgewuchtet,
- Auswuchtzustand gut/schlecht.
- Angabe der Fräs-/Zerspanungsparameter des verwendeten Werkzeugs

Günstigerweise ist das System gebrauchsfertig derart gerüstet, dass der Controller des Werkzeugmaschinensystems das Wuchtprotokoll bzw. dessen Wuchtdaten im Zuge des Einsetzens des betreffenden Werkzeugkopfes in ein der Werkzeugmaschine zugeordnetes Magazin mit dem oder den Parametern der spanabhebenden Bearbeitung abgleicht.

Für den konkreten Einsatzzweck nicht geeignete Werkzeugköpfe können dadurch frühzeitig abgefangen werden.

Idealerweise ist das System gebrauchsfertig derart gerüstet, dass der Controller des Werkzeugmaschinensystems die Wuchtdaten des Wuchtprotokolls nur oder, bevorzugt, auch vor der Einwechselung eines Werkzeugkopfes im Zuge der laufenden Bearbeitung aus dem Magazin in die Spindel mit dem oder den Parametern der spanabhebenden Bearbeitung abgleicht.

Dadurch kann die Kontrolldichte und damit die Zuverlässigkeit noch weiter gesteigert werden.

### EIN ZUSÄTZLICHER ASPEKT DER ERFINDUNG

Weiterhin liegt der Erfindung die Aufgabe zugrunde, eine Werkzeugmaschine zur Realisierung des zuvor beschriebenen, erfindungsgemäßen Werkzeugmaschinensystems zu schaffen.

### DIE INSOWEIT ERFINDUNGSGEMÄSSE LÖSUNG

Zur Lösung dieser weiteren Aufgabe wird eine Werkzeugmaschine vorgesehen, die sich dadurch auszeichnet, dass die Werkzeugmaschine einsatzbereit zur Kommunikation mit einem Controller und zur Auslesung eines Wuchtprotokolls der oben beschriebenen Art ausgerüstet ist. Das bedeutet im Regelfall, dass sie "Plug and Play"-fertig ausgerüstet ist. Zu diesem Zweck sind in ihrer Steuerung die entsprechenden Routinen bereits softwaremäßig implementiert, so dass die Werkzeugmaschine nach entsprechender Verkabelung oder Vernetzung erfindungsgemäß betrieben werden kann.

Im Rahmen einer bevorzugten Ausführungsform ist vorgesehen, dass die Werkzeugmaschine den Controller als körperlich-integralen Bestandteil umfasst.

Im Rahmen einer bevorzugten Ausführungsform ist vorgesehen, dass die Werkzeugmaschine den Speicher für das Wuchtprotokoll als körperlich-integralen Bestandteil umfasst.

### DER VERFAHRENSNMÄSSIGE ASPEKT DER ERFINDUNG

Schließlich liegt der Erfindung nebengeordnet die Aufgabe zugrunde, ein Verfahren anzugeben, das es erlaubt, die Unwuchteigenschaften eines Werkzeugkopfes schon zu einem Zeitpunkt zu berücksichtigen, der zeitlich vor dem nächstfolgenden Arbeitsbeginn des Werkzeugkopfes liegt.

### DIE INSOWEIT ERFINDUNGSGEMÄSSE LÖSUNG

Die Lösung besteht aus einem Verfahren zur Verringerung unwuchtbedingter Qualitätseinbußen bei der spanabhebenden Werkstückbearbeitung mittels eines Werkzeugmaschinensystems mit einer Werkzeugmaschine, die eine zum Zwecke der spanabhebenden Werkstückbearbeitung drehend antreibbare Spindel umfasst, mit mehreren, jeweils in Spannfutter eingespannten Werkzeugen bzw. Werkzeugköpfen", die an die Spindel ankuppelbar sind, und mit einer Wuchteinrichtung zum Auswuchten der Werkzeugköpfe aus Spannfutter und Werkzeug, dadurch gekennzeichnet, dass für jeden Werkzeugkopf ein Wuchtprotokoll abgespeichert wird, das für einen an die Spindel anzukuppelnden Werkzeugkopf ausgelesen und mit den Parametern der spanabhebenden Bearbeitung, für die dieser Werkzeugkopf vorgesehen ist, verglichen wird.

### SONSTIGES

Ganz allgemein lässt sich abschließend sagen, dass auch Schutz für ein Verfahren beansprucht wird, das sich dadurch auszeichnet, dass bei jedem Auswuchtvorgang Informationen über den aktuellen Auswuchtzustand des Werkzeugkopfes am Werkzeugkopf selbst und/oder in einer Datenbank abgelegt werden, wobei anschließend beim Einsetzen des Werkzeugkopfes in eine Maschine der Auswuchtzustand abgefragt wird und das Ergebnis der Abfrage bevorzugt maschinenbezogen in einer Protokolldatei (z. B. Log-Datei der Maschine) festgehalten wird, zu guter Letzt wird, je nach Auswuchtzustand des Werkzeugkopfes, dieses verwendet oder abgelehnt.

Darüber hinaus wird auch Schutz beansprucht für die Verwendung eines einem bestimmten Werkzeugkopf zuordenbar gespeicherten und vor Verwendung des Werkzeugkopfs auslesbaren Wuchtprotokolls zur Veränderung eines oder mehrerer Parameter einer spanabhebenden Bearbeitung, für die dieser Werkzeugkopf vorgesehen ist, so dass eine Zerspanungsoptimierung erfolgen kann.

Weitere Vorteile, Wirkungsweisen und Ausgestaltungsmöglichkeiten ergeben sich aus der nachfolgenden Beschreibung eines Ausführungsbeispiels anhand der Figuren.

### FIGURENLISTE

Die Figur 1 gibt einen Überblick über ein Ausführungsbeispiel des erfindungsgemäßen Werkzeugmaschinensystems.

Die Figur 2 zeigt ein bevorzugtes Schema, nach dem der Auswuchtzustand abgerufen und bewertet wird.

### AUSFÜHRUNGSBEISPIEL

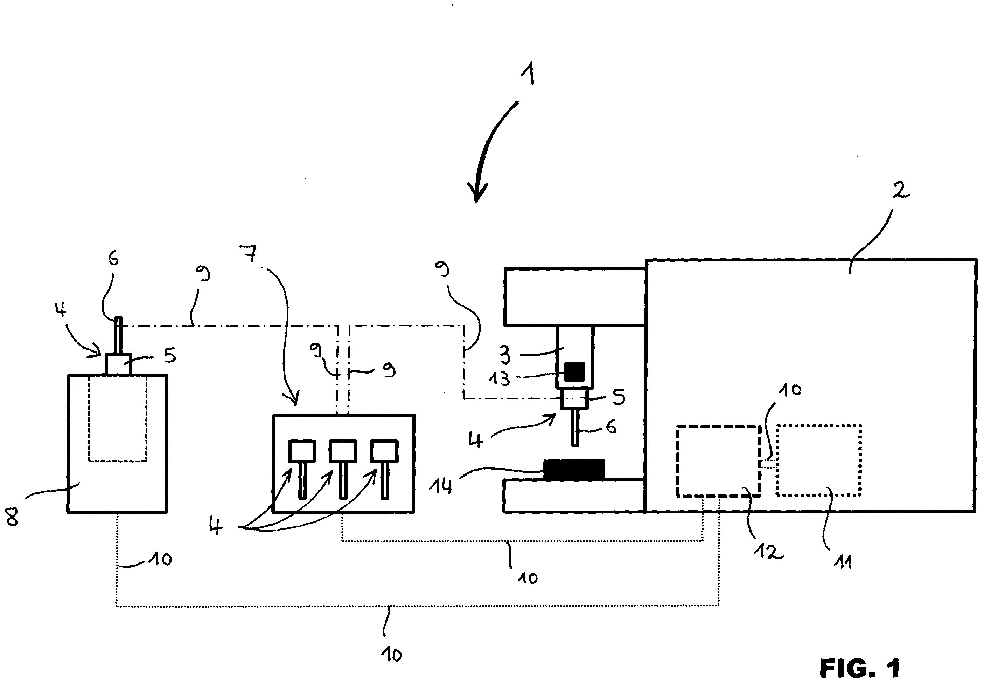

Die Figur 1 zeigt ein Ausführungsbeispiel der Erfindung.

Das erfindungsgemäße Werkzeugmaschinensystem 1 besteht aus einer Werkzeugmaschine 2, vorzugsweise in Gestalt der hier angedeuteten Fräsmaschine. Auf dieser ist das spanend zu bearbeitende Werkstück 14 aufgespannt.

Die Werkzeugmaschine 2 besitzt eine Hauptspindel 3. Sie kann auch mehrere Hauptspindeln besitzen, was hier nicht dargestellt ist. An die Hauptspindel 3 ist ein Werkzeugkopf 4 angekuppelt. Der Werkzeugkopf 4 ist eine Einheit, die im Regelfall aus einem Spannfutter 5 besteht, dem in dem Spannfutter 5 gehaltenen Zerspanungswerkzeug 6 und eventuellen Anbauteilen, wie etwa einer Längeneinstellschraube oder Vorrichtungen zur gerichteten Abgabe eines den Schneidbereich versorgenden Kühlmittelstrahls.

In der überwiegenden Zahl der Fälle ist der Werkzeugmaschine 2 ein Werkzeugwechsler 7 zugeordnet, der einen weiteren Systembestandteil bildet. In dessen Magazin befinden sich unterschiedliche Werkzeugköpfe 4, die je nach Bedarf an die Hauptspindel 3 der Werkzeugmaschine an- und abgekuppelt werden.

Schließlich gehört zu dem erfindungsgemäßen Werkzeugmaschinensystem 1 auch noch eine Wuchteinrichtung bzw. Wuchtmaschine 8. In diese Wuchtmaschine 8 kann jeweils ein Werkzeugkopf 4 eingesetzt werden.

Die Wege, die die einzelnen Werkzeugköpfe 4 bei dem vorliegenden Ausführungsbeispiel nehmen, sind durch strichpunktierte Materialflusslinien 9 veranschaulicht. Der Datenfluss zwischen den einzelnen Komponenten des Werkzeugmaschinensystems 1 wird durch fein punktierte Datenflusslinien 10 veranschaulicht.

Nach dem Zusammenbau eines Spannfutters 5 und eines Zerspanungswerkzeugs 6 zu einem Werkzeugkopf 4 wird dieser Werkzeugkopf 4 im Regelfall im Zuge der Werkzeugvermessung bzw. Werkzeug-Voreinstellung der Wuchtmaschine 8 zugeführt. Die Wuchtmaschine 8 erzeugt, auch unabhängig vom konkreten Anwendungsfall, ein sogenanntes Wuchtprotokoll, auf dessen idealerweise gegebenen Inhalt später noch näher einzugehen ist. Bei bekannten Anforderungen kann der Auswuchtzustand hier auch verbessert werden, d. h. der betreffende Werkzeugkopf 4 wird ausgewuchtet. Schon an dieser Stelle kann das Wuchtprotokoll bewertet werden, etwa dahingehend, ob der betreffende Werkzeugkopf im Lichte der geplanten Zerspanungsaufgaben hier überhaupt zur Bestückung der Werkzeugmaschine 2 geeignet ist oder ob er erst dann zur Bestückung der Werkzeugmaschine 2 geeignet ist, wenn sein Auswuchtzustand noch verbessert worden ist, beispielsweise durch Umspannen (Repositionierung) des Zerspanungswerkzeugs 6 in dem Spannfutter 5 oder sogar durch Materialabnahme am Spannfutter 5 bzw. die Hinzufügung von Material, etwa in Gestalt von Wuchtgewichten.

Das endgültige Wuchtprotokoll wird in diesem Ausführungsbeispiel an den Datenspeicher 11 übermittelt, der hier integraler Bestandteil der Werkzeugmaschine 2 sein kann. Dort wird das Wuchtprotokoll abgelegt. Dann wird der Werkzeugkopf 4 dem Magazin des Werkzeugwechslers 7 zugeführt. Bemerkenswert ist noch, dass die Werkzeugmaschine 2 einen bevorzugt ebenfalls in sie integrierten Controller 12 besitzt, der das Wuchtprotokoll aus dem Datenspeicher 11 auslesen und verarbeiten kann.

Im Zuge der zerspanenden Werkstückbearbeitung ist im Regelfall mehrfach ein Wechsel des Werkzeugkopfes 4 erforderlich, damit die Werkzeugmaschine 2 die einzelnen Bearbeitungsschritte nacheinander optimal ausführen kann. Sobald die Werkzeugmaschine 2 einen anderen Werkzeugkopf 4 aus dem Magazin des Werkzeugwechslers 7 anfordert, liest der Controller 12 das zugehörige Wuchtprotokoll aus dem Datenspeicher 11 ein und gleicht automatisch dessen Wuchtdaten mit dem oder den Parametern der nachfolgend beabsichtigten zerspanenden Bearbeitung ab.

Stellt sich heraus, dass der zunächst ausgewählte Werkzeugkopf 4 nicht geeignet ist, weil das Wuchtprotokoll zu schlechte Wuchtdaten aufweist, wird der Werkzeugkopf 4 zurückgewiesen, d. h., er verbleibt im Magazin des Werkzeugwechslers 7 und wird gar nicht erst an die Spindel 3 der Werkzeugmaschine angekuppelt.

Optional besteht die Möglichkeit, dass der Controller 12 bzw. die allgemeine Steuerung der Werkzeugmaschine 2 die Parameter der nachfolgend beabsichtigten zerspanenden Bearbeitung ändert und so anpasst, dass ein Einklang zwischen den Bearbeitungsparametern und den Wuchtdaten des Wuchtprotokolls hergestellt ist, oder eine entsprechende Optimierung vorgenommen wird. Die Maschine wird dann beispielsweise langsamer und/oder mit verringertem Vorschub arbeiten oder schneller, gemäß moderner, softwareoptimierter Frässtrategien (trockene Zerspanung), kann aber den ursprünglich ausgewählten Werkzeugkopf 4 doch verwenden.

Im Rahmen einer besonders zweckmäßigen Ausführungsform ist vorgesehen, dass die Spindel 3 der Werkzeugmaschine 2 selbst mit einem zusätzlichen Unwuchtmesssystem 13 ausgerüstet ist. Die Werkzeugmaschine hat dann die Möglichkeit, über die Dauer der laufenden Bearbeitung hinweg selbst zu überwachen, ob der Werkzeugkopf die vor dem Bearbeitungsbeginn im Wuchtprotokoll dokumentierte Wuchtgüte beibehält oder ob sich zumindest Indizien ergeben, dass sich die Wuchtgüte im Zuge der Bearbeitung verändert hat, etwa durch Verschleiß oder durch Ausbrechen von Schneidenbestandteilen und dergleichen. Ergeben sich solche Indizien, dass sich die Wuchtgüte verändert hat, dann macht der Controller 12 oder die allgemeine Steuerung der Werkzeugmaschine 2 vorzugsweise einen Eintrag in das Wuchtprotokoll und/oder in die interne Log-Datei der Werkzeugmaschine. Der Controller 12 oder die allgemeine Steuerung der Werkzeugmaschine 2 kann besonders bevorzugt einen Eintrag in den Datenspeicher machen. Meist wird ein solcher Eintrag in das Wuchtprotokoll dazu führen, dass der betreffende Werkzeugkopf 4 ausgeschleust und überarbeitet wird. Es kann aber auch genügen, dass das Wuchtprotokoll für die Zukunft die vermutlich geringere Wuchtgüte kenntlich macht und dann dieser Werkzeugkopf 4 zwar weiter verwendet wird, aber nur noch für anspruchslosere Bearbeitungsschritte. In jedem Fall ermöglicht die Log-Datei damit erstmal eine Analyse über den Zusammenhang zwischen Spindelausfall und Verwendungszeitraum von ungewuchteten Werkzeugen.

Vorzugsweise werden die Vibrations-Metadaten ebenfalls von dem Controller zum Werkzeug im Datenspeicher abgelegt, um einen Vergleich mit anderen Werkzeugen durchzuführen.

Der Auswuchtzustand kann bevorzugt, einzeln oder in Kombination, durch folgende Wuchtdaten beschrieben werden:
Er kann durch das kalendarische Datum des letzten Auswuchtvorganges beschrieben werden. Hieran anknüpfend kann durch Erfahrungswerte, die beispielsweise im Controller 12 abgelegt werden, ermittelt werden, wann typischerweise die Verschleißgrenze erreicht ist, bei deren Erreichen der Werkzeugkopf 4 nicht weiter verwendet werden kann, sondern ausgeschleust werden muss. Das Datum des letzten Auswuchtvorgangs kann auch dahingehend ausgewertet werden, dass ein maximal zulässiger Zeitraum, der seit diesem Datum verstrichen ist, festgelegt wird. Wenn dieser Zeitraum dieses Maximum nicht überschreitet, kann angenommen werden, dass der Auswuchtzustand des Werkzeuges noch den Anforderungen entspricht. Dies ist insbesondere dann sinnvoll, wenn es eine allgemeine Vereinbarung gibt, dass die Werkzeugköpfe während eines Auswuchtvorgangs immer auf einen bestimmten Auswuchtzustand gebracht werden. In diesem Fall ist es nicht notwendig, detaillierte Angaben zum Auswuchtzustand im Wuchtprotokoll abzuspeichern.

Der Auswuchtzustand kann durch Angabe der zulässigen Drehzahl beschrieben werden. Diese Information ist die einfachste Information, um klar festzulegen, bis zu welcher Spindeldrehzahlgrenze der betreffende Werkzeugkopf 4 eingesetzt werden kann.

Der Auswuchtzustand kann auch durch Angabe der vorhandenen Restunwucht, etwa der statischen Unwucht und/oder der dynamischen Unwucht, beispielsweise als Kombination der statischen Unwucht mit der Momentenunwucht angegeben werden, vorzugsweise unter zusätzlicher Angabe der Werkzeugmasse. Besonders bevorzugt und um Speicherplatz auf einem Datenträger zu sparen, kann der Auswuchtzustand des Werkzeuges in Form einer Kennzahl bestehend aus dem Quotienten zwischen Werkzeugmasse und vorhandener Unwucht angegeben werden. Zusammen mit der vorgesehenen Betriebsdrehzahl, die im Controller 12 der Werkzeugmaschine hinterlegt ist, kann die vorhandene Auswuchtgüte berechnet und mit einem Sollwert verglichen werden.

Selbstverständlich kann der Auswuchtzustand auch durch alleinige Angabe der Auswuchtgüte angegeben werden. Dies ist insbesondere dann möglich, wenn in einer allgemeinen Vereinbarung festgelegt ist, dass die Werkzeugköpfe immer zur Benutzung bei einer bestimmten Drehzahl ausgewuchtet werden.

Natürlich kann, zumindest als Zusatzinformation, mit Hinblick auf den Auswuchtzustand auch angegeben werden, ob überhaupt ausgewuchtet wurde oder nicht, und gegebenenfalls auch eine qualitative Information hinterlegt werden, ob der Auswuchtzustand gut oder schlecht ist. Ferner können separat Zerspanungsdaten des Werkzeuges abgespeichert werden.

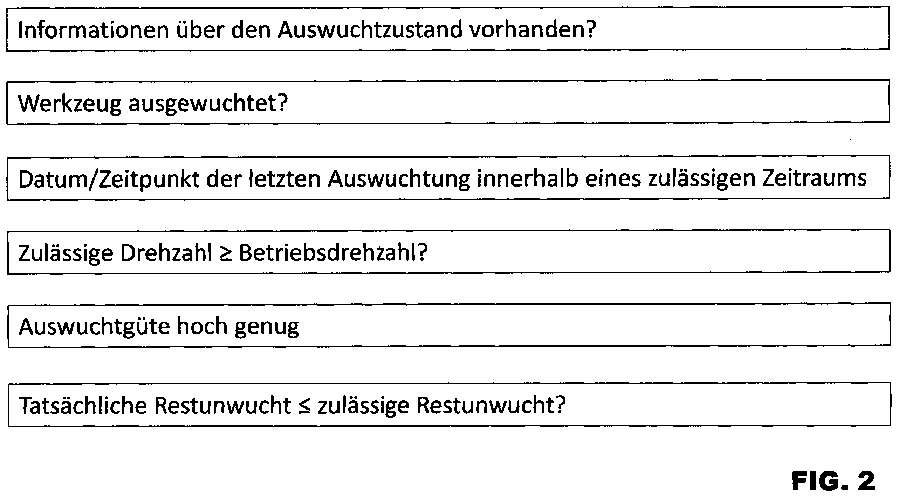

Idealerweise werden Informationen aus dem Wuchtprotokoll in einem oder allen der von Figur 2 beschriebenen Schritte abgerufen. Das heißt, der Controller 12 ruft im Idealfall zunächst ab, ob überhaupt Informationen über den Auswuchtzustand vorhanden sind. Sodann wird abgefragt, ob das Werkzeug ausgewuchtet wurde und wann dies zuletzt geschah, also ob das letzte Auswuchten innerhalb eines zulässigen Zeitraums liegt. Sodann wird aus dem Protokoll abgefragt, welche maximale Drehzahl aufgrund des Auswuchtzustandes des Werkzeugkopfes zulässig ist. Diese wird mit der geplanten Betriebsdrehzahl abgeglichen, unter der der Werkzeugkopf eingesetzt werden soll. Sodann wird abgefragt, ob die Auswuchtgüte hoch genug ist und ob die tatsächliche Restunwucht ≤ der zulässigen Restunwucht ist.

Wenn die Prüfung ergibt, dass der Auswuchtzustand den Anforderungen entspricht, wird der Werkzeugkopf verwendet oder mit grünem Status in der Steuerung oder dem Controller visualisiert.

Wenn die Prüfung ergibt, dass der Auswuchtzustand nicht den Anforderungen entspricht oder nicht bekannt ist, wird der Werkzeugkopf zurückgewiesen werden. Alternativ kann eine Sonderfreigabe zur Verwendung des Werkzeugs erfolgen, d. h. das Werkzeug wird ausnahmsweise doch eingesetzt, um den Arbeitsfluss nicht zu unterbrechen. Zweckmäßigerweise wird dieser Fall in einer Datenbank (beispielsweise einer Log-Datei) maschinenbezogen protokolliert, oder alternativ oder zusätzlich mit rotem Status visualisiert.

Der Vollständigkeit halber sei noch hervorgehoben, dass die Unterbringung des Datenspeichers 11 und/oder des Controllers 12 in der Werkzeugmaschine 2 vorteilhaft ist, aber nicht zwingend sein muss. Es sind auch Fälle denkbar, in denen der Datenspeicher 11 und/oder der Controller 12 durch eine selbstständige Netzwerkkomponente realisiert werden, die nur datenmäßig mit der Wuchtmaschine 8 und der Werkzeugmaschine 2 verbunden ist. Unter datenmäßiger Verbindung ist dabei im nicht bevorzugten Extremfall auch die Übertragung von Daten mit mobilen Datenträgern zu verstehen.

Ein Ausführungsbeispiel für einen Datentransfer via Netzwerk soll im Nachfolgenden erläutert werden.

In einem weiteren Ausführungsbeispiel ist der Datentransfer über ein Netzwerk realisiert. Der Datenspeicher 11 befindet sich in diesem weiteren Ausführungsbeispiel abgesetzt von der Werkzeugmaschine 2 im sogenannten "Data Analyzer and Controller" (im Nachfolgenden DAC genannt). Der DAC ist beispielsweise ein netzwerkbasiertes Dienstprogramm, welches primär der Verwaltung von Werkzeugdaten dient. Insbesondere sind dies neben Nominalwerten vor allem die ermittelten Voreinstell- und Wuchtdaten. Die Wuchtmaschine 8 speichert in diesem weiteren Ausführungsbeispiel die Daten im Datenspeicher 11 der DAC. Die Datenübertragung 10 erfolgt beispielsweise via Ethernet Netzwerk und ist insbesondere via Transport Layer Security (TLS) abgesichert. Der Datenspeicher nimmt die Daten beispielsweise über eine REST-Schnittstelle (Representational State Transfer) entgegen. Insbesondere speichert der Datenspeicher die Daten über die REST-Schnittstelle. Im weiteren Ausführungsbeispiel fragt der Controller 12 bei geplanter Verwendung des entsprechenden Werkzeugkopfs die Wuchtdaten, und bevorzugt weitere, werkzeugspezifische Parameter, wie beispielsweise die Daten aus der Voreinstellung, ebenfalls über eine gesicherte REST-Schnittstelle am Datenspeicher (11) der DAC ab. Im Ausführunsbeispiel ist beispielsweise ein Controller der Firma Heidenheim, Typ TNC640 eingesetzt. Nach Abruf der (Wucht-) Daten ermittelt der Controller (12) insbesondere die Eignung des Werkzeugkopfs (4) für die geplante Aufgabe. Im Falle einer Nichteignung wird beispielsweise ein Hinweis an den Bediener ausgegeben.

Wiederum alternativ kann auch vorgesehen sein, dass jeder Werkzeugkopf 4 selbst einen geeigneten Datenspeicher trägt, in dem das Wuchtprotokoll abgelegt und dem Werkzeugkopf sozusagen "mitgegeben" wird. Zu denken ist hier beispielsweise an einen integrierten RFID-Chip.

Ein Ausführungsbeispiel für einen Datentransfer via RFID-Datenträger soll im Nachfolgenden anhand eines weiteren Ausführungsbeispiels erläutert werden.

Der Datenfluss von der Wuchtmaschine 8 zum Controller 12 erfolgt in diesem weiteren Ausführungsbeispiel via RFID-Datenträger. In der beispielhaften Realisierung ist im Werkzeughalter, insbesondere im Werkzeugkopf 4, ein Datenträger, nämlich der RFID-Datenträger oder RFID-Chip eingesetzt. Im Ausführungsbeispiel wurde insbesondere ein Datenträger der Firma Balluff vom Typ BIS C-122-04/L verwendet. Dies ist nur beispielhaft. Auch andere Datenträger, beispielsweise Datenträger des Typs BIS C oder BIS M der Firma Balluff können verwendet werden. Auch können beispielsweise Datenträger bzw. RFID-Systeme anderer Hersteller verwendet werden.

Im weiteren Ausführungsbeispiel umfasst das Werkzeugmaschinensystem 1 zum Übertragen der Wuchtdaten auf den Datenträger ein Schreib-/Lesekopf nebst Auswerteeinheit. Die Auswerteeinheit muss insbesondere kompatibel zum eingesetzten Datenträger sein. In der erfindungsgemäßen Lösung ist die Auswerteeinheit mit dem Lesekopf in einem Niederfrequenzbereich eingesetzt. Im weiteren Ausführungsbeispiel ist die Auswerteeinheit via serieller Schnittstelle (RS232) mit [dem PC] der Wuchtmaschine 8 verbunden. Im Ausführungsbeispiel wurde beispielhaft eine Auswerteeinheit der Firma Balluff verwendet, insbesondere das Modell BIS-C-650, welches insbesondere einen BIS-C-Lesekopf umfasst, der vorzugsweise im Niederfrequenz- oder im unteren Mittelwellenbereich arbeitet, insbesondere mit 70/455 kHz.

Im weiteren Ausführungsbeispiel ist die Anordnung der Daten auf dem Datenträger, für das Gesamtsystem, zwischen den einzelnen Komponenten abgestimmt. Bevorzugt ist der Controller 12 das führende System. Eine Konfigurationsdatei definiert an der Wuchtmaschine 8 die Konfiguration der Daten auf dem Datenträger. Die Konfigurationsdatei ist insbesondere als XML-Datei realisiert. Die Konfigurationsdatei genügt zweckmäßig einem definierten Schema.

Falls keine Wuchtdaten für den Werkzeugkopf hinterlegt sind erfolgt eine Warnung zur Prüfung oder eine gelbe Visualisierung in der Steuerung oder am Controller.

### BEZUGSZEICHENLISTE

- 1: Werkzeugmaschinensystem
- 2: Werkzeugmaschine
- 3: Spindel bzw. Hauptspindel
- 4: Werkzeugkopf
- 5: Spannfutter
- 6: Zerspanungswerkzeug
- 7: Werkzeugwechsler
- 8: Wuchtmaschine bzw. Wuchteinrichtung
- 9: Materialflusslinie
- 10: Datenflusslinie
- 11: Datenspeicher
- 12: Controller
- 13: zusätzliches Unwuchtmesssystem an der Werkzeugmaschine
- 14: zu zerspanendes Werkstück

## Patentansprüche

1. Werkzeugmaschinensystem (1) mit einer Werkzeugmaschine (2), die eine zum Zwecke der spanabhebenden Werkstückbearbeitung drehend antreibbare Spindel (3) umfasst, mit mehreren, jeweils in Spannfutter (5) eingespannten Werkzeugen in Gestalt sog. Werkzeugköpfe (4), die an die Spindel (3) ankuppelbar sind, und mit einer Wuchteinrichtung (8) zum Auswuchten der Werkzeugköpfe (4), **dadurch gekennzeichnet, dass** das Werkzeugmaschinensystem (1) einen Datenspeicher (11) umfasst, in dem für die systemzugehörigen Werkzeugköpfe (4) jeweils ein zugehöriges Wuchtprotokoll abgespeichert ist, und einen Controller (12) umfasst, der für einen an die Spindel (3) anzukuppelnden Werkzeugkopf (4) Wuchtdaten aus dem Wuchtprotokoll ausliest und mit einem oder mehreren Parametern der spanabhebenden Bearbeitung, für die dieser Werkzeugkopf (4) vorgesehen ist, vergleicht oder mit mindestens einem allgemeinen Wuchtparameter vergleicht, wobei das Werkzeugmaschinensystem (1) so gestaltet ist, dass es einen Werkzeugkopf (4) ablehnt, wenn keine Wuchtdaten für diesen Werkzeugkopf (4) verfügbar sind,
**dadurch gekennzeichnet, dass**
das Wuchtprotokoll mehrere der nachfolgend genannten Wuchtdaten dokumentiert: Datum des letzten Auswuchtvorgangs, Angabe der zulässigen Drehzahl, Angabe der vorhandenen Restunwucht, statische Unwucht mit oder ohne Angabe der Werkzeugmasse, dynamische Unwucht mit oder ohne Angabe der Werkzeugmasse, z. B. als Kombination statische Unwucht mit Momentenunwucht, Angabe der Auswuchtgüte nach ISO 21940, Quotient aus Werkzeugmasse/Restunwucht, Zerspanungs- und Fräsparameter**,** augewuchtet - nicht ausgewuchtet.

2. Werkzeugmaschinensystem (1) nach Anspruch 1, **dadurch gekennzeichnet, dass** der Controller (12) so gestaltet ist, dass er einen oder mehrere Parameter für die vorgesehene spanabhebende Bearbeitung an die Wuchtdaten anpasst, die das Wuchtprotokoll für den betreffenden Werkzeugkopf (4) dokumentiert.

3. Werkzeugmaschinensystem (1) nach Anspruch 1 oder 2, **dadurch gekennzeichnet, dass** der Controller (12) so gestaltet ist, dass er einen Werkzeugkopf (4) zurückweist, wenn dessen Wuchtdaten nicht zu einem oder mehreren Parametern der spanabhebenden Bearbeitung passen, für die dieser Werkzeugkopf (4) vorgesehen ist, oder wenn dessen Wuchtdaten nicht hinreichend dokumentiert sind, um zu beurteilen, ob sie zu dem oder den Parametern der spanabhebenden Bearbeitung passen, für die dieser Werkzeugkopf (4) vorgesehen ist.

4. Werkzeugmaschinensystem (1) nach Anspruch 1 oder 2, **dadurch gekennzeichnet, dass** der Controller (12) so gestaltet ist, dass er für einen Werkzeugkopf (4), ausnahmsweise eine Freigabe zur weiteren Verwendung zulässt, wenn dessen Wuchtdaten nicht zu den Parametern der spanabhebenden Bearbeitung passen, für die dieser Werkzeugkopf (4) vorgesehen ist, wobei der Controller (12) die Sonderfreigabe dokumentiert, vorzugsweise im Wuchtprotokoll für den betreffenden Werkzeugkopf (4) und die Sonderfreigabe vorzugsweise visualisiert.

5. Werkzeugmaschinensystem (1) nach einem der vorhergehenden Ansprüche, **dadurch gekennzeichnet, dass** die Werkzeugmaschine (2) so ausgerüstet ist, dass sie das Wuchtprotokoll fortschreiben kann.

6. Werkzeugmaschinensystem (1) nach einem der Ansprüche 1 bis 5,
**dadurch gekennzeichnet, dass** der Controller (12) des Werkzeugmaschinensystems (1) die Wuchtdaten des Wuchtprotokolls im Zuge des Einsetzens des betreffenden Werkzeugkopfes (4) in ein der Werkzeugmaschine (2) zugeordnetes Magazin mit dem oder den Parametern der spanabhebenden Bearbeitung abgleicht.

7. Werkzeugmaschinensystem (1) nach einem der Ansprüche 1 bis 5,
**dadurch gekennzeichnet, dass** der Controller (12) des Werkzeugmaschinensystems (1) die Wuchtdaten des Wuchtprotokolls nur oder auch vor der Einwechslung eines Werkzeugkopfes (4) im Zuge der laufenden Bearbeitung aus dem Magazin mit dem oder den Parametern der spanabhebenden Bearbeitung abgleicht.

8. Werkzeugmaschinensystem (1) nach einem der vorhergehenden Ansprüche, **dadurch gekennzeichnet, dass** die Werkzeugmaschine (2) betriebsfertig dazu gerüstet ist, über einen Controller (12) Wuchtdaten aus einem Datenspeicher (11) für ein Wuchtprotokoll auszulesen.

9. Werkzeugmaschinesystem (1) nach Anspruch 8, **dadurch gekennzeichnet, dass** die Werkzeugmaschine (2) den Controller (12) als körperlich-integralen Bestandteil umfasst.

10. Werkzeugmaschinesystem (1) nach Anspruch 8 oder 9,
**dadurch gekennzeichnet, dass** die Werkzeugmaschine (2) den Datenspeicher (11) für das Wuchtprotokoll als körperlich-integralen Bestandteil umfasst.

11. Werkzeugmaschinensystem (1) nach einem der vorhergehenden Ansprüche, **dadurch gekennzeichnet, dass** das Werkzeugmaschinensystem (1) eine Einrichtung aufweist, die Abweichungen einem oder mehreren Parametern visualisiert.

12. Werkzeugmaschinensystem (1) nach Anspruch 3 oder 4, **dadurch gekennzeichnet, dass** der Controller (12) so gestaltet ist, dass er die Zurückweisung bzw. Freigabe vom Werkzeugkopf (4) noch vor dessen Ankuppeln an die Spindel (3) vornimmt.

13. Verfahren zur Verringerung unwuchtbedingter Qualitätseinbußen bei der spanabhebenden Werkstückbearbeitung mittels eines Werkzeugmaschinensystems (1) mit einer Werkzeugmaschine(2), die eine zum Zwecke der spanabhebenden Werkstückbearbeitung drehend antreibbare Spindel (3) umfasst, mit mehreren, jeweils in Spannfutter (5) eingespannten Werkzeugen "sog. Werkzeugköpfen" (4) die an die Spindel (3) ankuppelbar sind, und mit einer Wuchteinrichtung (8) zum Auswuchten der in die Spannfutter (5) eingespannten Werkzeuge, **dadurch gekennzeichnet, dass** für jeden Werkzeugkopf (4), bevor dieser mit seinem nächsten Einsatzzyklus beginnt, automatisch geprüft wird, ob der Werkzeugkopf wie geplant zum Einsatz kommen kann, wozu ein Wuchtprotokoll abgespeichert wird, dessen Wuchtdaten für einen an die Spindel (3) anzukuppelnden Werkzeugkopf (4) ausgelesen und mit den Parametern der spanabhebenden Bearbeitung, für die dieser Werkzeugkopf (4) vorgesehen ist, verglichen werden, wobei das Wuchtprotokoll mehrere der nachfolgend genannten Wuchtdaten dokumentiert: Datum des letzten Auswuchtvorgangs, Angabe der zulässigen Drehzahl, Angabe der vorhandenen Restunwucht, statische Unwucht mit oder ohne Angabe der Werkzeugmasse, dynamische Unwucht mit oder ohne Angabe der Werkzeugmasse, z. B. als Kombination statische Unwucht mit Momentenunwucht, Angabe der Auswuchtgüte nach ISO 21940, Quotient aus Werkzeugmasse/Restunwucht, Zerspanungs- und Fräsparameter, ausgewuchtet - nicht ausgewuchtet.

14. Verwendung eines einem bestimmten Werkzeugkopf (4) zuordenbar gespeicherten und vor Verwendung des Werkzeugkopfes (4) auslesbaren Wuchtprotokolls zur Veränderung eines oder mehrerer Parameter einer spanabhebenden Bearbeitung, für die dieser Werkzeugkopf vorgesehen ist, zu dessen Einsatz, nachdem der Werkzeugskopf (4) folgend das Verfahrensschritte des Ansprcuhs 1 zurückgewiesen wird,
**dadurch gekennzeichnet, dass**
das Wuchtprotokoll mehrere der nachfolgend genannten Wuchtdaten dokumentiert: Datum des letzten Auswuchtvorgangs, Angabe der zulässigen Drehzahl, Angabe der vorhandenen Restunwucht, statische Unwucht mit oder ohne Angabe der Werkzeugmasse, dynamische Unwucht mit oder ohne Angabe der Werkzeugmasse, z. B. als Kombination statische Unwucht mit Momentenunwucht, Angabe der Auswuchtgüte nach ISO 21940, Quotient aus Werkzeugmasse/Restunwucht, Zerspanungs- und Fräsparameter**,** ausgewuchtet -nicht ausgewuchtet.

## Claims

1. Machine tool system (1) comprising a machine tool (2), which has a spindle (3) which can be rotationally driven for the purpose of machining workpieces, comprising a plurality of tools in the form of what are known as tool heads (4), which are each clamped in chucks (5) and can be coupled to the spindle (3), and comprising a balancing device (8) for balancing the tool heads (4), **characterized in that** the machine tool system (1) comprises a data store (11), in which an associated balancing protocol is stored for each of the system-associated tool heads (4), and comprises a controller (12), which reads balancing data from the balancing protocol for a tool head (4) to be coupled to the spindle (3) and compares the data with one or more parameters of the machining operation for which this tool head (4) is intended, or compares the data with at least one general balancing parameter, the machine tool system (1) being designed such that it declines a tool head (4) if no balancing data is available for this tool head (4),
**characterized in that**
the balancing protocol documents several of the following balancing data: date of the last balancing operation, specification of the permissible speed, specification of the existing residual imbalance, static imbalance with or without specification of the tool mass, dynamic imbalance with or without specification of the tool mass, e.g. as a combination of static imbalance with moment imbalance, specification of the balance quality according to ISO 21940, quotient of tool mass/residual imbalance, machining and milling parameters, balanced - not balanced.

2. Machine tool system (1) according to claim 1, **characterized in that** the controller (12) is designed to adapt one or more parameters for the intended machining operation to the balancing data documented in the balancing protocol for the relevant tool head (4).

3. Machine tool system (1) according to claim 1 or 2, **characterized in that** the controller (12) is designed to reject a tool head (4) if its balancing data does not match one or more parameters of the machining operation for which this tool head (4) is intended, or if its balancing data is not sufficiently documented to assess whether it matches the parameter or parameters of the machining operation for which this tool head (4) is intended.

4. Machine tool system (1) according to claim 1 or 2, **characterized in that** the controller (12) is designed to permit, as an exception, a release for further use of a tool head (4) if its balancing data does not match the parameters of the machining operation for which this tool head (4) is intended, the controller (12) documenting the special release, preferably in the balancing protocol for the relevant tool head (4), and preferably visualizing the special release.

5. Machine tool system (1) according to any of the preceding claims,
**characterized in that** the machine tool (2) is equipped such that it can continue the balancing protocol.

6. Machine tool system (1) according to any of claims 1 to 5,
**characterized in that** the controller (12) of the machine tool system (1) compares the balancing data relating to the balancing protocol during the insertion of the relevant tool head (4) into a magazine associated with the machine tool (2) with the parameter or parameters of the machining operation.

7. Machine tool system (1) according to any of claims 1 to 5,
**characterized in that** the controller (12) of the machine tool system (1) compares the balancing data relating to the balancing protocol only or also before the exchange of a tool head (4), during the ongoing machining operation, from the magazine with the parameter or parameters of the machining operation.

8. Machine tool system (1) according to any of the preceding claims,
**characterized in that** the machine tool (2) is operationally readily equipped to read, via a controller (12), balancing data from a data store (11) for a balancing protocol.

9. Machine tool system (1) according to claim 8, **characterized in that** the machine tool (2) comprises the controller (12) as a physically integral component.

10. Machine tool system (1) according to claim 8 or 9, **characterized in that** the machine tool (2) comprises the data store (11) for the balancing protocol as a physically integral component.

11. Machine tool system (1) according to any of the preceding claims,
**characterized in that** the machine tool system (1) has a device that visualizes deviations from one or more parameters.

12. Machine tool system (1) according to claim 3 or 4, **characterized in that** the controller (12) is designed such that it performs the rejection or release of the tool head (4) before the toll head is coupled to the spindle (3).

13. Method for reducing imbalance-related quality losses when machining workpieces by means of a machine tool system (1) having a machine tool (2) comprising a spindle (3) which can be rotationally driven for the purpose of machining workpieces, comprising a plurality of tools, known as "tool heads" (4), which are each clamped in chucks (5) and can be coupled to the spindle (3), and comprising a balancing device (8) for balancing the tools clamped in the chucks (5), **characterized in that**, for each tool head (4), before it begins its next use cycle, it is automatically checked whether the tool head can be used as planned, for which a balancing protocol is saved, the balancing data relating to which protocol is read for a tool head (4) to be coupled to the spindle (3) and compared with the parameters of the machining operation for which this tool head (4) is intended, the balancing protocol documenting several of the following balancing data: date of the last balancing operation, specification of the permissible speed, specification of the existing residual imbalance, static imbalance with or without specification of the tool mass, dynamic imbalance with or without specification of the tool mass, e.g. as a combination of static imbalance with moment imbalance, specification of the balance quality according to ISO 21940, quotient of tool mass/residual imbalance, machining and milling parameters, balanced - not balanced.

14. Use of a balancing protocol, which can be associated with a specific tool head (4) and is stored and readable prior to use of the tool head (4), for changing one or more parameters of a machining operation for which this tool head is intended, relating to its use, after the tool head (4) is rejected following the method steps of claim 1,
**characterized in that**
the balancing protocol documents several of the following balancing data: date of the last balancing operation, specification of the permissible speed, specification of the existing residual imbalance, static imbalance with or without specification of the tool mass, dynamic imbalance with or without specification of the tool mass, e.g. as a combination of static imbalance with moment imbalance, specification of the balance quality according to ISO 21940, quotient of tool mass/residual imbalance, machining and milling parameters, balanced - not balanced.

## Revendications

1. Système de machine-outil (1) comportant une machine-outil (2) qui comprend une broche (3) pouvant être entraînée en rotation en vue de l'usinage par enlèvement de copeaux d'une pièce à travailler, comportant plusieurs outils, respectivement serré dans un mandrin (5), sous la forme de têtes d'outils (4), qui peuvent être accouplés à la broche (3), et comportant un dispositif d'équilibrage (8) destiné à équilibrer les têtes d'outils (4), **caractérisé en ce que** le système de machine-outil (1) comprend une mémoire de données (11) dans laquelle est enregistré, pour les têtes d'outils (4) appartenant au système, respectivement un protocole d'équilibrage associé, et un dispositif de commande (12) qui, pour une tête d'outil (4) à accoupler à la broche (3) lit des données d'équilibrage dans le protocole d'équilibrage et les compare à un ou plusieurs paramètres de l'usinage par enlèvement de copeaux pour lequel cette tête d'outil (4) est prévue, ou les compare à au moins un paramètre d'équilibrage général, dans lequel le système de machine-outil (1) est conçu de telle sorte qu'il refuse une tête d'outil (4) si aucune donnée d'équilibrage n'est disponible pour cette tête d'outil (4),
**caractérisé en ce que**
le protocole d'équilibrage consigne plusieurs des données d'équilibrage mentionnées ci-dessous : date de la dernière opération d'équilibrage, indication de la vitesse de rotation admissible, indication du déséquilibre résiduel présent, déséquilibre statique avec ou sans indication de la masse de l'outil, déséquilibre dynamique avec ou sans indication de la masse de l'outil, par exemple sous forme d'une combinaison de déséquilibre statique et de déséquilibre de couple, indication de la qualité d'équilibrage selon la norme ISO 21940, rapport entre la masse de l'outil et le déséquilibre résiduel, paramètres d'enlèvement de matière et de fraisage, équilibré - non équilibré.

2. Système de machine-outil (1) selon la revendication 1,
**caractérisé en ce que** le dispositif de commande (12) est conçu pour adapter un ou plusieurs paramètres de l'usinage par enlèvement de copeaux prévu aux données d'équilibrage qui sont consignées dans le protocole d'équilibrage pour la tête d'outil (4) concernée.

3. Système de machine-outil (1) selon la revendication 1 ou 2,
**caractérisé en ce que** le dispositif de commande (12) est conçu pour rejeter une tête d'outil (4) lorsque ses données d'équilibrage ne correspondent pas à un ou plusieurs paramètres de l'usinage par enlèvement de copeaux pour lequel cette tête d'outil (4) est prévue, ou lorsque ses données d'équilibrage ne sont pas suffisamment consignées pour permettre d'évaluer si elles correspondent au ou aux paramètres de l'usinage par enlèvement de copeaux pour lesquels cette tête d'outil (4) est prévue.

4. Système de machine-outil (1) selon la revendication 1 ou 2,
**caractérisé en ce que** le dispositif de commande (12) est conçu de telle sorte qu'il admet, à titre exceptionnel, pour une tête d'outil (4), une autorisation pour une utilisation ultérieure lorsque ses données d'équilibrage ne correspondent pas aux paramètres de l'usinage par enlèvement de copeaux pour lequel cette tête d'outil (4) est prévue, dans lequel le dispositif de commande (12) consigne cette autorisation spéciale, de préférence dans le protocole d'équilibrage de la tête d'outil (4) concernée, et visualise de préférence cette autorisation spéciale.

5. Système de machine-outil (1) selon l'une des revendications précédentes, **caractérisé en ce que** la machine-outil (2) est équipée de manière à pouvoir mettre à jour le protocole d'équilibrage.

6. Système de machine-outil (1) selon l'une des revendications 1 à 5,
**caractérisé en ce que** le dispositif de commande (12) du système de machine-outil (1) compare les données d'équilibrage du protocole d'équilibrage, lors de la mise en place de la tête d'outil (4) concernée dans un magasin associé à la machine-outil (2) avec le ou les paramètres de l'usinage par enlèvement de copeaux.

7. Système de machine-outil (1) selon l'une des revendications 1 à 5,
**caractérisé en ce que** le dispositif de commande (12) du système de machine-outil (1) compare les données d'équilibrage du protocole d'équilibrage uniquement ou également avant le remplacement d'une tête d'outil (4) à partir du magasin, au cours de l'usinage en cours, avec le ou les paramètres de l'usinage par enlèvement de copeaux.

8. Système de machine-outil (1) selon l'une des revendications précédentes,
**caractérisé en ce que** la machine-outil (2) est préparée, dès sa mise en service, pour lire, par l'intermédiaire d'un dispositif de commande (12), des données d'équilibrage d'une mémoire de données (11) pour un protocole d'équilibrage.

9. Système de machine-outil (1) selon la revendication 8,
**caractérisé en ce que** la machine-outil (2) comprend le dispositif de commande (12) en tant que partie intégrante physique.

10. Système de machine-outil (1) selon la revendication 8 ou 9,
**caractérisé en ce que** la machine-outil (2) comprend, en tant que partie intégrante physique, la mémoire de données (11) pour le protocole d'équilibrage.

11. Système de machine-outil (1) selon l'une des revendications précédentes, **caractérisé en ce que** le système de machine-outil (1) présente un dispositif qui visualise les écarts par rapport à un ou plusieurs paramètres.

12. Système de machine-outil (1) selon la revendication 3 ou 4,
**caractérisé en ce que** le dispositif de commande (12) est conçu de manière à effectuer le rejet ou l'autorisation de la tête d'outil (4) avant même son accouplement à la broche (3).

13. Procédé visant à réduire les pertes de qualité dues au déséquilibre lors de l'usinage par enlèvement de copeaux d'une pièce à travailler par le biais d'un système de machine-outil (1) comportant une machine-outil (2), qui comprend une broche (3) pouvant être entraînée en rotation aux fins de l'usinage par enlèvement de copeaux de pièce à travailler, comportant plusieurs outils, sous forme de têtes d'outils (4), serrés respectivement dans un mandrin (5) qui peuvent être accouplés à la broche (3), et comportant un dispositif d'équilibrage (8) destiné à équilibrer les outils serrés dans les mandrins (5), **caractérisé en ce que** pour chaque tête d'outil (4), avant que celle-ci n'entame son prochain cycle d'utilisation, il est vérifié automatiquement si la tête d'outil peut être utilisée comme prévu, ce pour quoi un protocole d'équilibrage est enregistré, dont les données d'équilibrage d'une tête d'outil (4) à accoupler à la broche (3) sont lues et comparées aux paramètres de l'usinage par enlèvement de copeaux pour lequel cette tête d'outil (4) est prévue, dans lequel le protocole d'équilibrage consigne plusieurs des données d'équilibrage mentionnées ci-après : date de la dernière opération d'équilibrage, indication de la vitesse de rotation admissible, indication du déséquilibre résiduel présent, déséquilibre statique avec ou sans indication de la masse de l'outil, déséquilibre dynamique avec ou sans indication de la masse de l'outil, par exemple sous forme d'une combinaison de déséquilibre statique et de déséquilibre de couple, indication de la qualité d'équilibrage selon la norme ISO 21940, rapport entre la masse de l'outil et le déséquilibre résiduel, paramètres d'enlèvement de matière et de fraisage, équilibré - non équilibré.

14. Utilisation d'un protocole d'équilibrage, enregistré de manière à être associé à une tête d'outil (4) spécifique et pouvant être lu avant l'utilisation de la tête d'outil (4), pour modifier un ou plusieurs paramètres d'un usinage par enlèvement de copeaux auquel cette tête d'outil est destinée, en vue de son utilisation, après que la tête d'outil (4) a été rejetée conformément aux étapes de procédé de la revendication 1,
**caractérisée en ce que**
le protocole d'équilibrage consigne plusieurs des données d'équilibrage mentionnées ci-dessous : date de la dernière opération d'équilibrage, indication de la vitesse de rotation admissible, indication du déséquilibre résiduel présent, déséquilibre statique avec ou sans indication de la masse de l'outil, déséquilibre dynamique avec ou sans indication de la masse de l'outil, par exemple sous forme d'une combinaison de déséquilibre statique et de déséquilibre de couple, indication de la qualité d'équilibrage selon la norme ISO 21940, rapport entre la masse de l'outil et le déséquilibre résiduel, paramètres d'enlèvement de matière et de fraisage, équilibré - non équilibré.
